# EUROPÄISCHE PATENTSCHRIFT

(11) **EP 2 445 772 B1**
(45) Veröffentlichungstag und Bekanntmachung des Hinweises auf die Patenterteilung: **09.04.2014**
(21) Anmeldenummer: 10734932.6
(22) Anmeldetag: 23.06.2010
(51) Int. Cl.: B62D 1/16, B62D 5/083, B62D 6/10, G01L 5/22

(54) **LENKWELLENBAUTEIL, LENKWELLE UND HERSTELLUNGSVERFAHREN**
STEERING SHAFT COMPONENT, STEERING SHAFT AND PRODUCTION METHOD
ÉLÉMENT D'ARBRE DE DIRECTION, ARBRE DE DIRECTION ET PROCÉDÉ DE FABRICATION

(30) Priorität: 23.06.2009 DE 102009030238; 14.07.2009 DE 102009032991
(43) Veröffentlichungstag der Anmeldung: 02.05.2012
(73) Patentinhaber: Bless, Werner M., 8630 Rüti (CH)
(72) Erfinder: Bless, Werner M., 8630 Rüti (CH)
(74) Vertreter: Dendorfer, Claus
(86) Internationale Anmeldenummer: PCT/EP2010/058921
(87) Internationale Veröffentlichungsnummer: WO 2010/149707

(56) Entgegenhaltungen:
- EP-A1- 0 502 761
- WO-A1-97/09221

## Beschreibung

Die Erfindung betrifft allgemein das technische Gebiet der Fahrzeuglenkungen und insbesondere das Gebiet der Lenkwellen. Spezieller betrifft die Erfindung ein Lenkwellenbauteil, eine Lenkwelle und ein Herstellungsverfahren. Als "Lenkwelle" werden im vorliegenden Dokument alle Komponenten verstanden, die zur Lenkkraftübertragung zwischen einem Lenkrad und einem Lenkgetriebe dienen. Beispielsweise umfasst der Begriff "Lenkwelle" unter anderem diejenigen Bauteile, die oft als "Lenksäule" oder "Lenkspindel" bezeichnet werden.

Im Fahrzeugbau werden heute allgemein hydraulische oder elektrische Hilfskraftlenkungen ("Servolenkungen") verwendet. Bei derartigen Lenkungen werden die Lenkkräfte und/oder Lenkbewegungen des Fahrzeugführers abgetastet und in Stellbewegungen eines Hydraulikventils oder in elektrische Signale umgesetzt.

DE 10 2007 047 827 A1 zeigt eine Drehmoment-Sensoreinheit mit einem als Drehstab ausgebildeten Torsionselement. Derartige Konstruktionen sind in vielen unterschiedlichen Ausgestaltungen gut bekannt. Allgemein sind Lenkungsbaugruppen mit Drehstab jedoch in der Herstellung und Montage aufwendig. Der Drehstab ist ein separates Bauteil, das in der Lenkspindel verbohrt werden muss. In der Praxis ergeben sich hier relativ hohe Ausschussquoten, wobei stets eine gesamte Baugruppe verworfen werden muss, wenn sie nicht die gewünschte Kennlinie aufweist.

DE 101 20 580 A1 zeigt einen Sensor zur Messung eines Drehmoments einer rotierenden Welle, beispielsweise einer Antriebs- oder Kardanwelle eines Kraftfahrzeugs. Bei diesem Sensor wird die Verwindung der Welle gemessen und in ein elektrisches Signal umgewandelt. Zwar ist in der Offenlegungsschrift eine mögliche Verwendung des Sensors an einer Lenkwelle eines Kraftfahrzeugs erwähnt; dies erscheint jedoch wenig praktikabel, da sich eine üblich dimensionierte Lenkwelle bei üblichen Lenkkräften nur geringfügig verwindet. Eine hinreichend exakte Messung dürfte damit schwierig oder zumindest aufwendig sein.

WO 97/09221 A1 offenbart ein Lenkventil für eine Servolenkung. Das Lenkventil weist eine Eingangswelle, eine Ausgangswelle und eine Torsionssteganordnung auf. In der Torsionssteganordnung erstrecken sich Torsionsstege entlang der Oberfläche eines imaginären Zylinders zwischen einem scheibenförmigen Stirnflansch der Eingangswelle und einem scheibenförmigen Stirnflansch der Ausgangswelle. Die Torsionsstege sind jeweils einstückig mit jedem der beiden Stirnflansche verbunden. Zur Bildung eines Schutzes gegen Überbeanspruchung kann eine der beiden Wellen an ihrer Stirnfläche einen rechteckigen Abschnitt aufweisen, der in eine rechteckige Aussparung in der anderen der beiden Wellen ragt. Die rechteckige Aussparung ist gegenüber dem rechteckigen Abschnitt vergrößert, so dass beide Wellen um einen vorgegebenen Winkel zueinander verdrehbar sind, bis sie in Kontakt kommen.

EP 0 502 761 A1 zeigt einen Rohrkörper, in dem eine Lenkwelle mittels zweier Lager gelagert ist. Der Rohrkörper ist aus einem einzigen Metallblech rohrförmig gebogen.

Die Erfindung hat die Aufgabe, eine besonders kostengünstige Konstruktion eines Lenkwellenbauteils vorzuschlagen. Insbesondere soll sich das erfindungemäße Lenkwellenbauteil zur Verwendung in Zusammenhang mit der Messung von Lenkkräften bzw. der Steuerung einer Servolenkung eignen.

Die Erfindung wird durch die unabhängigen Ansprüche definiert. Die abhängigen Ansprüche betreffen optionale Merkmale von Ausführungsformen der Erfindung.

Erfindungsgemäß weist das Lenkwellenbauteil einen ersten und einen zweiten Lenkwellenabschnitt mit einer gemeinsamen Längsachse auf, sowie mindestens zwei voneinander getrennte Biegeabschnitte, wobei sich jeder der Biegeabschnitte im wesentlichen in axialer Richtung zwischen dem ersten und dem zweiten Lenkwellenabschnitt erstreckt und entfernt von der gemeinsamen Längsachse angeordnet ist. Das Lenkwellenbauteil weist ferner mindestens zwei Aussparungen auf, wobei jeder Biegeabschnitt seitlich an je mindestens eine dieser Aussparungen angrenzt. Mindestens eine der Aussparungen definiert mindestens einen Anschlagbereich eines der Lenkwellenabschnitte, der dazu eingerichtet ist, als mechanischer Anschlag den maximalen Verdrehungswinkel der beiden Lenkwellenabschnitte zueinander zu begrenzen.

In bevorzugten Ausgestaltungen wird jeder der Biegeabschnitte bei einer Verdrehung des ersten Lenkwellenabschnitts relativ zum zweiten Lenkwellenabschnitt mehr auf Biegung als auf Torsion beansprucht.

In bevorzugten Ausgestaltungen sind der erste und der zweite Lenkwellenabschnitt rohrförmig ausgestaltet, wobei der erste und der zweite Lenkwellenabschnitt einstückig miteinander ausgebildet sind. Lenkwellenbauteile gemäß derartigen Ausführungsbeispielen können besonders kostengünstig gefertigt werden. Überdies benötigen solche Lenkwellenbauteile wegen ihrer einstückigen Ausgestaltung beim Einbau in ein Kraftfahrzeug weniger Lager als herkömmliche Lenkwellen mit Torsionsmessstellen.

Erfindungsgemäß ist ein mechanischer Anschlag zur Begrenzung des maximalen Verdrehungswinkels der beiden Lenkwellenabschnitte zueinander vorgesehen.

In manchen Ausgestaltungen sind die gerade genannten Merkmale miteinander in unterschiedlichen Arten kombiniert, wie in den Ansprüchen angegeben.

In manchen Ausgestaltungen ist jeder Biegeabschnitt einstückig mit je mindestens einem der Lenkwellenabschnitte oder mit den beiden Lenkwellenabschnitten ausgebildet. Hierdurch verringert sich die Anzahl der erforderlichen Bauteile.

In manchen Ausgestaltungen können zwei, drei, vier, fünf oder mehr Biegeabschnitte vorgesehen sein. Diese Biegeabschnitte können durch eine entsprechende Zahl von Aussparungen definiert sein, die ihrerseits U-förmig oder H-förmig ausgestaltet sein können.

Der Anschlag zur Begrenzung des maximalen Verdrehungswinkels der beiden Lenkwellenabschnitte zueinander ist in manchen Ausgestaltungen dadurch gebildet, dass mindestens ein Anschlagbereich eines der Lenkwellenabschnitte dazu eingerichtet ist, in Kontakt mit mindestens einem Biegeabschnitt oder mindestens einem Teil des anderen Lenkwellenabschnitts zu kommen, wenn der maximal zulässige Verdrehungswinkel erreicht ist. In unterschiedlichen Ausführungsformen kann der Anschlagbereich seitlich im wesentlichen starr oder nachgiebig sein, wobei ein seitlich nachgiebiger Anschlagbereich zur Dämpfung eines seitlichen Anschlagstoßes dient.

In manchen Ausgestaltungen ist ein Ausreiß-Schutz vorgesehen, der ein Auseinanderziehen der Lenkwellenabschnitte in axialer Richtung verhindert.

In manchen Ausgestaltungen weist das Lenkwellenbauteil eine Beeinflussungseinrichtung auf, die auf eine Verdrehung des ersten Lenkwellenabschnitts zum zweiten Lenkwellenabschnitt anspricht. Die Beeinflussungseinrichtung kann beispielsweise ein Sensor oder ein Ventil sein.

In manchen Ausgestaltungen ist mindestens ein weiteres Bauteil vorgesehen, das mindestens einen Steg aufweist, der in eine der Aussparungen zwischen den Biegeabschnitten und angrenzenden Anschlagbereichen eingreift. Dieses weitere Bauteil kann beispielsweise als Ring oder als Clip ausgebildet sein.

Die erfindungsgemäße Lenkwelle umfasst ein Lenkwellenbauteil und gegebenenfalls weitere Komponenten.

Weitere Merkmale, Vorteile und Aufgaben der Erfindung ergeben sich aus den beigefügten schematischen Zeichnungen mehrerer Ausführungsbeispiele. Es zeigen:
Fig. 1A und Fig. 1B je eine perspektivische Ansicht eines-rohrförmigen Abschnitts eines Lenkwellenbauteils gemäß einem ersten Ausführungsbeispiel der Erfindung,
Fig. 1C eine Seitenansicht des Lenkwellenbauteils in dem ersten Ausführungsbeispiel,
Fig. 1D eine vergrößerte Querschnitts-Ansicht entlang der Linie D-D in Fig. 1C,
Fig. 2A eine auseinandergezogene Ansicht eines Lenkwellenbauteils gemäß einem zweiten Ausführungsbeispiel der Erfindung,
Fig. 2B eine perspektivische Ansicht des Lenkwellenbauteils von Fig. 2A,
Fig. 3A eine auseinandergezogene Ansicht eines Lenkwellenbauteils gemäß einem dritten Ausführungsbeispiel der Erfindung,
Fig. 3B eine vergrößerte Querschnitts-Ansicht entlang der Linie B-B in Fig. 3A,
Fig. 4 eine perspektivische Ansicht eines rohrförmigen Abschnitts eines Lenkwellenbauteils gemäß einem vierten Ausführungsbeispiel der Erfindung,
Fig. 5 eine perspektivische Ansicht eines rohrförmigen Abschnitts eines Lenkwellenbauteils gemäß einem fünften Ausführungsbeispiel der Erfindung,
Fig. 6A und Fig. 6B je eine perspektivische Ansicht eines rohrförmigen Abschnitts eines Lenkwellenbauteils gemäß einem sechsten Ausführungsbeispiel der Erfindung,
Fig. 7 eine perspektivische Ansicht eines rohrförmigen Abschnitts eines Lenkwellenbauteils gemäß einem siebten Ausführungsbeispiel der Erfindung,
Fig. 8 eine Seitenansicht eines rohrförmigen Abschnitts eines Lenkwellenbauteils gemäß einem achten Ausführungsbeispiel der Erfindung,
Fig. 9A eine auseinandergezogene Ansicht eines rohrförmigen Abschnitts eines Lenkwellenbauteils gemäß einem neunten Ausführungsbeispiel der Erfindung,
Fig. 9B eine perspektivische Ansicht des Abschnitts des Lenkwellenbauteils von Fig. 9A,
Fig. 10A eine auseinandergezogene Ansicht eines Lenkwellenbauteils gemäß einem zehnten Ausführungsbeispiel der Erfindung,
Fig. 10B eine perspektivische Ansicht des Lenkwellenbauteils von Fig. 10A,
Fig. 11A eine Seitenansicht eines rohrförmigen Abschnitts eines Lenkwellenbauteils gemäß einem elften Ausführungsbeispiel der Erfindung,
Fig. 11B eine perspektivische Ansicht des Abschnitts des Lenkwellenbauteils von Fig. 11A,
Fig. 11C eine vergrößerte Querschnitts-Ansicht entlang der Linie C-C in Fig. 11A,
Fig. 11D eine vergrößerte Seitenansicht eines Rings in dem Lenkwellenbauteil von Fig. 11A - Fig. 11C,
Fig. 11E eine vergrößerte perspektivische Ansicht des Rings von Fig. 11D,
Fig. 12A eine perspektivische Ansicht eines rohrförmigen Abschnitts eines Lenkwellenbauteils gemäß einem zwölften Ausführungsbeispiel der Erfindung,
Fig. 12B eine vergrößerte Seitenansicht des Abschnitts des Lenkwellenbauteils von Fig. 12A,
Fig. 12C eine vergrößerte perspektivische Ansicht eines Rings in dem Lenkwellenbauteil von Fig. 12A und Fig. 12B,
Fig. 13A eine perspektivische Ansicht eines rohrförmigen Abschnitts eines Lenkwellenbauteils gemäß einem dreizehnten Ausführungsbeispiel der Erfindung,
Fig. 13B eine vergrößerte Ansicht eines Clips in dem Abschnitt des Lenkwellenbauteils von Fig. 13A,
Fig. 14A eine perspektivische Ansicht eines rohrförmigen Abschnitts eines Lenkwellenbauteils gemäß einem vierzehnten Ausführungsbeispiel der Erfindung,
Fig. 14B eine vergrößerte Ansicht eines Clips in dem Abschnitt des Lenkwellenbauteils von Fig. 14A, und
Fig. 15 eine perspektivische Ansicht eines rohrförmigen Abschnitts eines Lenkwellenbauteils gemäß einem fünfzehnten Ausführungsbeispiel der Erfindung, bei dem ein Clip ähnlich wie in Fig. 14B eingesetzt ist.

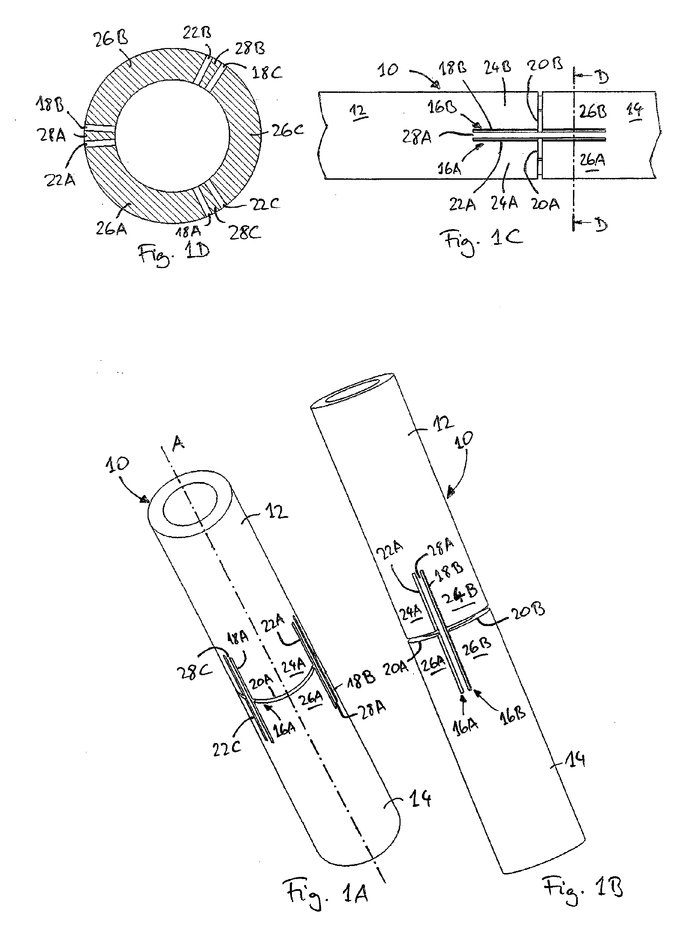

Das in Fig. 1A - Fig. 1D dargestellte Ausführungsbeispiel zeichnet sich durch besonders geringe Herstellungskosten aus. Ein Lenkwellenbauteil 10 ist als einstückiges Rohr mit einem ersten Lenkwellenabschnitt 12 und einem zweiten Lenkwellenabschnitt 14 ausgestaltet. Die beiden Lenkwellenabschnitte 12, 14 sind axial hintereinander angeordnet und weisen eine gemeinsame Längsachse A auf.

Es versteht sich, dass sich das Lenkwellenbauteil 10 über den in den Zeichnungen dargestellten Bereich hinaus fortsetzen kann und weitere - einstückig ausgebildete oder angefügte - Elemente aufweisen kann. Insbesondere kann in manchen Ausgestaltungen das Lenkwellenbauteil 10 eine Lenksäule zum Einbau in ein Kraftfahrzeug sein, während in anderen Ausführungsformen das Lenkwellenbauteil 10 nur einen relativ kurzen Abschnitt einer Lenkwelle - z.B. eine bei einem Lenkgetriebe angeordnete Lenkspindel mit einem Ritzel - bildet.

Zwischen den beiden Lenkwellenabschnitten 12, 14 weist das Lenkwellenbauteil 10 in dem vorliegenden Ausführungsbeispiel drei H-förmige Aussparungen 16A, 16B, 16C auf, die im folgenden zusammenfassend mit 16x bezeichnet werden. Wie in Fig. 1A beispielhaft gezeigt ist, besteht die Aussparung 16A aus einem ersten axial (in Richtung der Längsachse A) verlaufenden Einschnitt 18A, in den ungefähr mittig ein Ende eines in Umfangsrichtung verlaufenden Einschnitts 20A mündet. An seinem anderen Ende mündet der Einschnitt 20A wiederum ungefähr mittig in einen zweiten axial verlaufenden Einschnitt 22A. Die aus den drei Einschnitten 18A, 20A und 22A gebildete Aussparung 16A definiert einen starren Anschlagbereich 24A des ersten Lenkwellenabschnitts 12 und einen starren Anschlagbereich 26A des zweiten Lenkwellenabschnitts 14.

Die Aussparungen 16B und 16C sind entsprechend mit je einem ersten axialen Einschnitt 18B, 18C, je einem in Umfangsrichtung verlaufenden Einschnitt 20B, 20C und je einem zweiten axialen Einschnitt 22B, 22C ausgebildet. Durch diese Aussparungen 16B, 16C werden erste starre Anschlagbereiche 24B, 24C des ersten Lenkwellenabschnitts 12 und zweite starre Anschlagbereiche 26B, 26C des zweiten Lenkwellenabschnitts 14 abgegrenzt.

Je zwei aneinandergrenzende Aussparungen 16x definieren einen Biegeabschnitt 28A, 28B, 28C - im folgenden zusammenfassend mit 28x bezeichnet. Genauer gesagt, wird der erste Biegeabschnitt 28A seitlich von dem zweiten axialen Einschnitt 22A der ersten Aussparung 16A und dem ersten axialen Einschnitt 18B der zweiten Aussparung 16B begrenzt. Entsprechend begrenzen der zweite axiale Einschnitt 22B der zweiten Aussparung 16B und der erste axiale Einschnitt 18C der dritten Aussparung 16C den zweiten Biegeabschnitt 28B. Der dritte Biegeabschnitt 28C wird schließlich von dem zweiten axialen Einschnitt 22C der dritten Aussparung 16C und dem ersten axialen Einschnitt 18A der ersten Aussparung 16A definiert.

Jeder Biegeabschnitt 28x erstreckt sich zwischen dem ersten Lenkwellenabschnitt 12 und dem zweiten Lenkwellenabschnitt 14 ungefähr parallel zur gemeinsamen Längsachse A, aber seitlich (in radialer Richtung) von dieser versetzt. Die beiden Lenkwellenabschnitte 12, 14 sind durch die Biegeabschnitte 28x miteinander verbunden, aber im übrigen durch die Einschnitte 20x voneinander getrennt.

Die Biegeabschnitte 28x schließen nach außen und nach innen bündig mit der Außen- bzw. der Innenwand der rohrförmigen Lenkwellenabschnitte 12, 14 ab, so dass die Tiefe der Biegeabschnitte 28x der Wandstärke der Lenkwellenabschnitte 12, 14 entspricht. Diese Tiefe kann beispielsweise mindestens 2 mm oder mindestens 3 mm oder mindestens 5 mm betragen. Die in Umfangsrichtung weisenden Seitenflächen der Biegeabschnitte 28x erstrecken leicht schräg entlang radialer Strahlen, die von der Längsachse A ausgehen. Jeder der Biegeabschnitte 28x weist somit die Form eines Sektors eines Kreisbogens auf.

In beispielhaften Ausgestaltungen können die Biegeabschnitte 28x eine Länge (in Richtung der Längsachse A) von mindestens 2 cm oder mindestens 3 cm oder ungefähr 4 - 5 cm aufweisen. In Umfangsrichtung sind die Biegeabschnitte 28x relativ schmal; sie können z.B. an ihrer nach außen gerichteten Seite eine Breite von höchstens 8 mm oder höchstens 3 mm oder ungefähr 0,5 - 3 mm aufweisen. Bei typischen Lenkwellendurchmessern entspricht dies einem Winkelbereich von höchstens 30° oder höchstens 15° oder ungefähr 2° - 15° für jeden Biegeabschnitt 28x. Die Einschnitte 20x erstrecken sich über den verbleibenden Umfang des Lenkwellenbauteils 10, also beispielsweise über einen Winkelbereich von mehr als 270° oder mehr als 310° oder ungefähr 310° - 355°.

In vielen Ausgestaltungen der vorliegenden Erfindung sind die Biegeabschnitte 28x deutlich länger als breit ausgestaltet; beispielsweise kann die Länge der Biegeabschnitte 28x mindestens das 5-fache oder mindestens das 10-fache oder mindestens das 15-fache der maximalen Breite (am Außenumfang) betragen.

Die Einschnitte 18x, 20x, 22x der Aussparungen 16x sind relativ schmal; ihre Breite kann beispielsweise weniger als 3 mm oder weniger als 2 mm oder ungefähr 1 - 2 mm betragen. Diese Breite ist im vorliegenden Ausführungsbeispiel über die gesamte Tiefe der Einschnitte 18x, 20x, 22x hinweg ungefähr konstant.

Im vorliegenden Ausführungsbeispiel sind die Biegeabschnitte 28x einstückig sowohl mit dem ersten Lenkwellenabschnitt 12 als auch mit dem zweiten Lenkwellenabschnitt 14 ausgebildet. Zur Fertigung der gesamten in Fig. 1A - Fig. 1D gezeigten Konstruktion brauchen somit lediglich die Aussparungen 16x in ein geeignet dimensioniertes Rohr eingeschnitten zu werden oder in ein flaches Metallwerkstück, das später zu einem Rohr gerundet wird, eingestanzt zu werden.

Im Betrieb des Lenkwellenbauteils 10 verdrehen sich die beiden Lenkwellenabschnitte 12, 14 gegeneinander, wenn der Fahrzeugführer Lenkbewegungen ausführt. Die beiden Lenkwellenabschnitte 12, 14 verbleiben bei jedem Verdrehungswinkel fluchtend mit der Längsachse A. Bei der Verdrehung der Lenkwellenabschnitte 12, 14 werden die Biegeabschnitte 28x nicht oder nur in geringem Maße auf Torsion belast, sondern im wesentlichen zur Seite (in Umfangsrichtung des Lenkwellenbauteils 10) gebogen.

Bei geringen Lenkkräften ist der Verdrehungswinkel zwischen den Lenkwellenabschnitten 12, 14 proportional zu dem auf das Lenkwellenbauteil 10 ausgeübten Drehmoment. Dieser Verdrehungswinkel wird von einer geeigneten Beeinflussungseinrichtung (in Fig. 1A - Fig. 1D nicht gezeigt) gemessen und/oder in eine Steuerwirkung umgesetzt. Beispielsweise kann die Beeinflussungseinrichtung ein elektrischer oder optischer oder magnetischer Sensor sein, der Lenkkraftsignale an eine Steuerelektronik ausgibt. In anderen Ausgestaltungen kann die Beeinflussungseinrichtung ein Hydraulikventil zur Steuerung einer hydraulischen Hilfskrafteinheit sein.

Ein mechanischer Anschlag begrenzt die maximale Verdrehung der beiden Lenkwellenabschnitte 12, 14 zueinander in beide Richtungen - ausgehend von der unbelasteten Stellung gemäß Fig. 1A - Fig. 1D - auf jeweils wenige Grad. Dieser mechanische Anschlag wird im vorliegenden Ausführungsbeispiel dadurch gebildet, dass je eine Seitenfläche jedes der sechs starren Anschlagbereiche 24x, 26x an je eine Seitenfläche eines Biegeabschnitts 28x anstößt. Beispielsweise stößt bei einer Verdrehung des ersten Lenkwellenabschnitts 12 in Fig. 1A im Uhrzeigersinn eine Seitenfläche des starren Anschlagbereichs 24A an den dritten Biegeabschnitt 28C, eine Seitenfläche des starren Anschlagbereichs 26A an den ersten Biegeabschnitt 28A, und so weiter. Entsprechendes gilt bei einer Verdrehung des ersten Lenkwellenabschnitts 12 in Fig. 1A gegen den Uhrzeigersinn.

Der maximale Verdrehungswinkel der beiden Lenkwellenabschnitte 12, 14 ist durch die Breite der axialen Einschnitte 18x, 22x bestimmt. Bei der oben beispielhaft genannten Breite von wenigen Millimetern beträgt der maximale Verdrehungswinkel z.B. weniger als 10° oder weniger als 5° oder weniger als 3°. Da die Biegeabschnitte 28x im Verhältnis zu ihrer Länge relativ schmal dimensioniert sind, wird dieser Winkel schon bei mittleren Lenkkräften erreicht und damit der mechanische Anschlag wirksam.

In der Anschlagstellung wirken gewisse Scherkräfte auf die Biegeabschnitte 28x. Natürlich muss dafür Sorge getragen werden, dass hierdurch die Biegeabschnitte 28x nicht beschädigt werden. Zum Schutz der Biegeabschnitte 28x dient insbesondere die Ausgestaltung der axialen Einschnitte 18x, 22x mit konstanter Breite, während die Biegeabschnitte 18x und die Anschlagbereiche 24x, 26x im Querschnitt als Sektoren eines Kreisbogens ausgestaltet sind. Bei einer Verdrehung der Lenkwellenabschnitte 12, 14 bis zum Anschlag liegen daher die Biegeabschnitte 18x über ihre gesamte Tiefe hinweg an den jeweiligen Anschlagbereichen 24x, 26x an.

Es versteht sich, dass in Ausführungsalternativen mehr oder weniger als drei Aussparungen 16x vorgesehen sein können, insbesondere nur zwei Aussparungen oder vier, fünf, sechs, sieben oder acht Aussparungen. Das Lenkwellenbauteil 10 weist dann eine entsprechende Zahl von Biegeabschnitten 28x auf. In manchen Ausgestaltungen kann auch nur eine einzige Aussparung und/oder ein einziger Biegeabschnitt an einer Seite des Lenkwellenbauteits 10 vorhanden sein. In der Regel ist dann eine zusätzliche äußere Führungshülse oder ein innerer Führungsstift erforderlich, um sicherzustellen, dass die Lenkwellenabschnitte 12, 14 auf ihrer gemeinsamen Längsachse A verbleiben, wenn Lenkkräfte auf das Lenkwellenbauteil 10 ausgeübt werden. Diese möglichen Alternativen sind natürlich nicht nurbei dem Ausführungsbeispiel nach Fig. 1A - Fig. 1D vorgesehen, sondern bei allen im vorliegenden Dokument beschriebenen Ausführungsbeispielen.

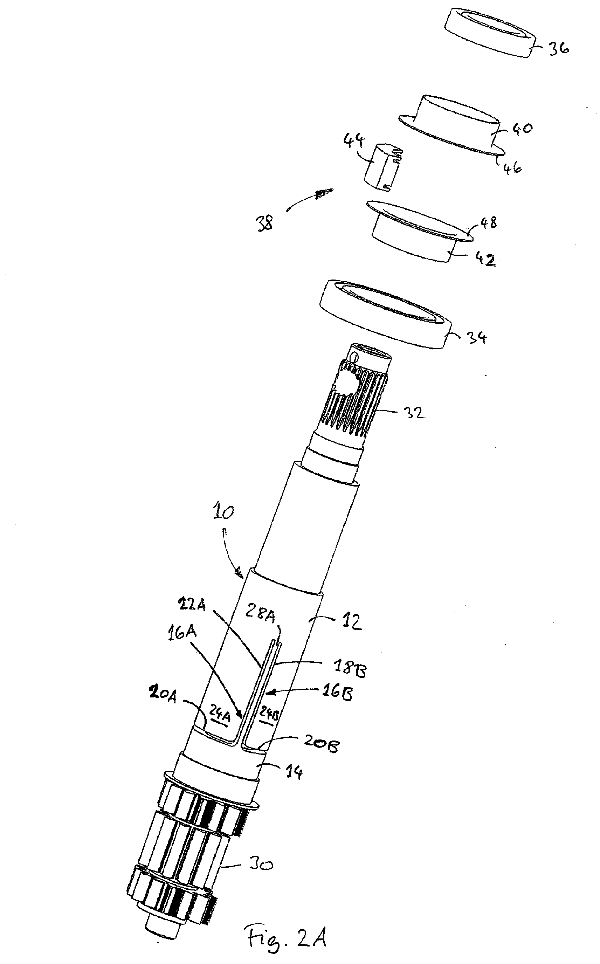

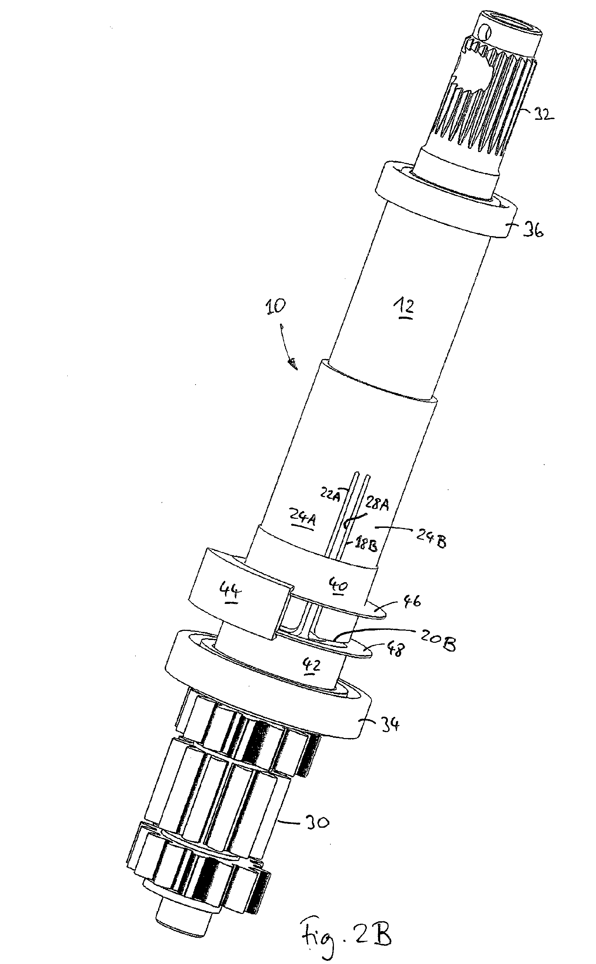

Bei dem in Fig. 2A und Fig. 2B gezeigten Ausführungsbeispiel ist das Lenkwellenbauteil 10 als Lenkspindel ausgebildet und weist ein Ritzel 30, die beiden Lenkwellenabschnitte 12, 14 sowie ein gezahntes Verbindungsstück 32 für eine Lenksäule oder ein Kreuzgelenk auf. Das Lenkwellenbauteil 10 gemäß Fig. 2A und Fig. 2B kann in der Bauform genau einer üblichen Lenkspindel mit Torsionsstab entsprechen, so dass keine Änderungen an einem bereits bestehenden Gehäuse erforderlich sind.

Bei dem Lenkwellenbauteil 10 gemäß Fig. 2A und Fig. 2B ist jede der Aussparungen 16x U-förmig ausgestaltet. Mit anderen Worten ist der in Umfangsrichtung verlaufende Einschnitt 20x jeder Aussparung 16x nicht ungefähr in der Mitte, sondern an dem in Fig. 2A und Fig. 2B unteren Ende der zugehörigen axialen Einschnitte 18x, 22x ausgebildet. An den Übergängen zwischen dem in Umfangsrichtung verlaufenden Einschnitt 20x und den axialen Einschnitten 18x, 22x sind Rundungen ausgeformt, die die mechanische Belastung der Biegeabschnitte 28x durch Scherkräfte, die in einer Anschlagposition des Lenkwellenbauteils 10 auf die Biegeabschnitte 28x wirken, verringern. Es versteht sich, dass alle im vorliegenden Dokument beschriebenen Ausführungsbeispiele wahlweise mit H-förmigen oder mit U-förmigen Aussparungen 16x ausgestaltet sein können.

In Fig. 2A und Fig. 2B sind ferner zwei Lager 34, 36 zur Lagerung des Lenkwellenbauteils 10 in einem Lenkspindel-Gehäuse (nicht gezeigt) einer Zahnstangenlenkung dargestellt. Ferner zeigen Fig. 2A und Fig. 2B eine Beeinflussungseinrichtung 38, die im vorliegenden Ausführungsbeispiel zwei Magnetringe 40, 42 und einen Sensor 44 aufweist. Die Magnetringe 40, 42 sind auf je einen der Lenkwellenabschnitte 12, 14 aufgepresst, so dass der erste Magnetring 40 drehfest mit dem ersten Lenkwellenabschnitt 12 und der zweite Magnetring 42 drehfest mit dem zweiten Lenkwellenabschnitt 14 verbunden ist.

Radiale Flansche 46, 48 der Magnetringe 40, 42 weisen eine Vielzahl magnetisierter Bereiche auf. Der Sensor 44 ist als elektrischer Magnetfeldsensor ausgestaltet, der die Flansche 46, 48 der Magnetringe 40, 42 abtastet und eine Verdrehung der Magnetringe 40, 42 relativ zueinander - entsprechend einer Verdrehung der Lenkwellenabschnitte 12, 14 - ermittelt. Der Sensor 44 erzeugt ein elektrisches Signal, das die ermittelte Verdrehung und somit die ausgeübte Lenkkraft angibt. Der in Fig. 2A und Fig. 2B gezeigte Sensor 44 ist lediglich als Beispiel zu verstehen; andere geeignete Sensorkonstruktionen sind als solche gut bekannt und ebenfalls in Verbindung mit dem erfindungsgemäßen Lenkwellenbauteil 10 verwendbar.

Der Magnetring 40 hat ferner die Wirkung, dass er den Lenkwellenabschnitt 12 stabilisiert und insbesondere jedes Risiko, dass die Anschlagbereiche 24x bei außergewöhnlicher Belastung nach außen gedrängt werden könnten, sicher verhindert. Es versteht sich, dass diese Wirkung auch mit einem anderen Ring, der nicht als Magnetring ausgestaltet ist, erzielt werden kann. Derartige Sicherungsringe können in allen hier beschriebenen Ausführungsbeispielen der Erfindung auf dem Lenkwellenabschnitt 12 in Höhe der Anschlagbereiche 24x und/oder dem Lenkwellenabschnitt 14 in Höhe der Anschlagbereiche 26x vorgesehen sein.

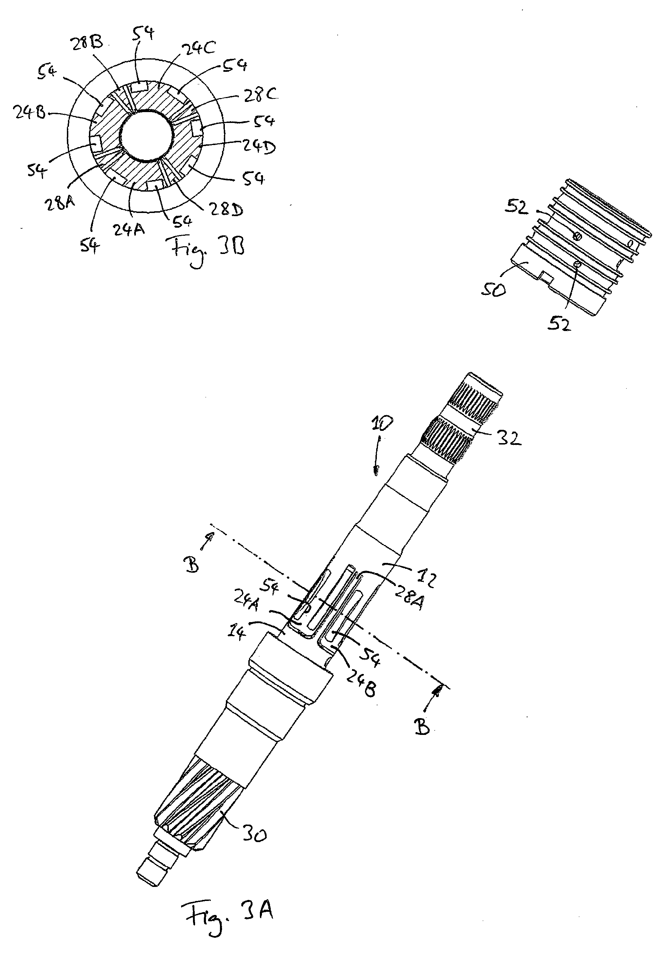

Bei dem in Fig. 3A und Fig. 3B gezeigten Ausführungsbeispiel ist das Lenkwellenbauteil 10 als Lenkspindel für eine hydraulische Servolenkung ausgebildet. Eine Außenhülse 50 mit Ein- und Auslässen 52 für Hydraulikfluid ist drehfest mit dem zweiten Lenkwellenabschnitt 14 verbunden. In den ersten Lenkwellenabschnitt 12 - genauer gesagt, in die Außenfläche der Anschlagbereiche 24x - sind Fluidkanäle 54 eingearbeitet. Die Außenhülse 50 bildet in Verbindung mit den Fluidkanälen 54 ein Drehschieberventil. Auf an sich bekannte Weise steuert eine Verdrehung der beiden Lenkwellenabschnitte 12, 14 zueinander den Durchsatz von Hydraulikfluid, das zur Lenkkraftunterstützung dient, durch das Drehschieberventil. Auch hier ist die konkrete Ausgestaltung des in Fig. 3A und Fig. 3B gezeigten Hydraulikventils lediglich beispielhaft zu verstehen. Viele andere Ausgestaltungen von hydraulikventilen sind an sich bekannt und mit dem erfindungsgemäßen Lenkwellenbauteil 10 verwendbar.

Aus Fig. 3B wird deutlich, dass das Lenkwellenbauteil 10 des vorliegenden Ausführungsbeispiels vier Biegeabschnitte 28A, 28B, 28C, 28D und entsprechend vier von den Aussparungen 16x umschlossene, hier starre Anschlagbereiche 24A, 24B, 24C, 24D vorgesehen sind. Wie bereits erwähnt, können alle im vorliegenden Dokument beschriebenen Ausführungsbeispiele mit unterschiedlichen Anzahlen - vorzugsweise drei oder vier - von Aussparungen 16x, Biegeabschnitten 28x, Anschlagbereichen 24x und gegebenenfalls Anschlagbereichen 26x.ausgestaltet sein.

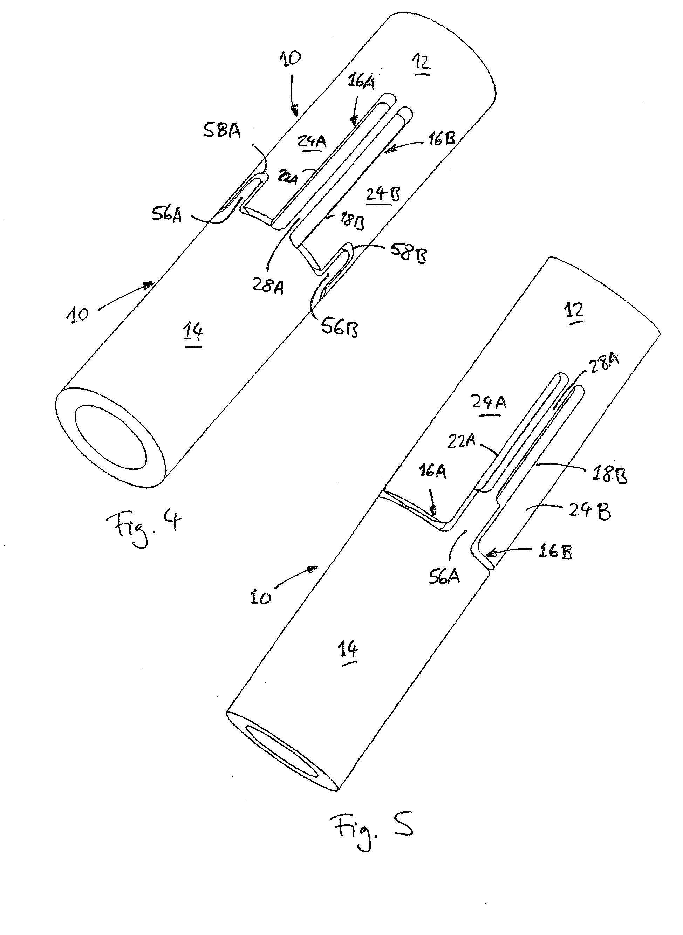

Fig. 4 und Fig. 5 zeigen zwei alternative Ausgestaltungen des mechanischen Anschlags zur Begrenzung des maximalen Verdrehungswinkels zwischen den Lenkwellenabschnitten 12, 14. Bei diesen Ausgestaltungen ist die Funktion der Biegeabschnitte 28x von der Funktion des mechanischen Anschlags getrennt, um die mechanische Belastung der Biegeabschnitte 28x zu verringern. Es versteht sich, dass die Ausgestaltungen des mechanischen Anschlags gemäß Fig. 4 und Fig. 5 mit allen anderen hier beschriebenen Ausführungsbeispielen kombiniert werden können.

Bei dem Ausführungsbeispiel gemäß Fig. 4 weist der zweite Lenkwellenabschnitt 14 mehrere Nasen 56A, 56B - zusammenfassend 56x - auf, die in einer Ruheposition des Lenkwellenbauteils 10 mit beiderseitigem Abstand in je eine Bucht 58A, 58B - zusammenfassend 58x - des ersten Lenkwellenabschnitts 12 ragen. Jede Bucht 58x ist von einem Bereich einer der Aussparungen 16x gebildet. Wenn der erste Lenkwellenabschnitt 12 in Fig. 4 im Uhrzeigersinn gegen den zweiten Lenkwellenabschnitt 14 verdreht wird, schlagen jeweils die rechten Seitenwände der Buchten 58x and die rechten Seitenwände der Nasen 56x an und begrenzen den maximalen Verdrehungswinkel. Bei einer Verdrehung gegen den Uhrzeigersinn schlagen die linken Seitenwände der Buchten 58x and die linken Seitenwände der Nasen 56x an. Die axialen Einschnitte 18x, 22x der Aussparungen 16x sind hier breiter dimensioniert, so dass die Biegeabschnitte 28x in keiner möglichen Verdrehungsposition in Kontakt mit den Anschlagbereichen 24x kommen.

Bei dem in Fig. 5 gezeigten Ausführungsbeispiel sind am zweiten Lenkwellenbauteil 14 im wesentlichen starre Nasen 56x ausgebildet, die in Richtung zum ersten Lenkwellenbauteil 12 hin in die schmäleren und elastischen Biegeabschnitte 28x übergehen. Bei einer Verdrehung des ersten Lenkwellenabschnitts 12 im Uhrzeigersinn schlägt die Nase 56A mit ihrer rechten Seitenwand an die angrenzende linke Seitenwand des Anschlagbereichs 24B an. Entsprechend schlägt bei einer Verdrehung des ersten Lenkwellenabschnitts 12 gegen den Uhrzeigersinn die Nase 56A mit ihrer linken Seitenwand an die rechte Seitenwand des Anschlagbereichs 24A an. Wieder werden die Biegeabschnitte 28x geschont, weil sie keine Funktionen eines Anschlags übernehmen.

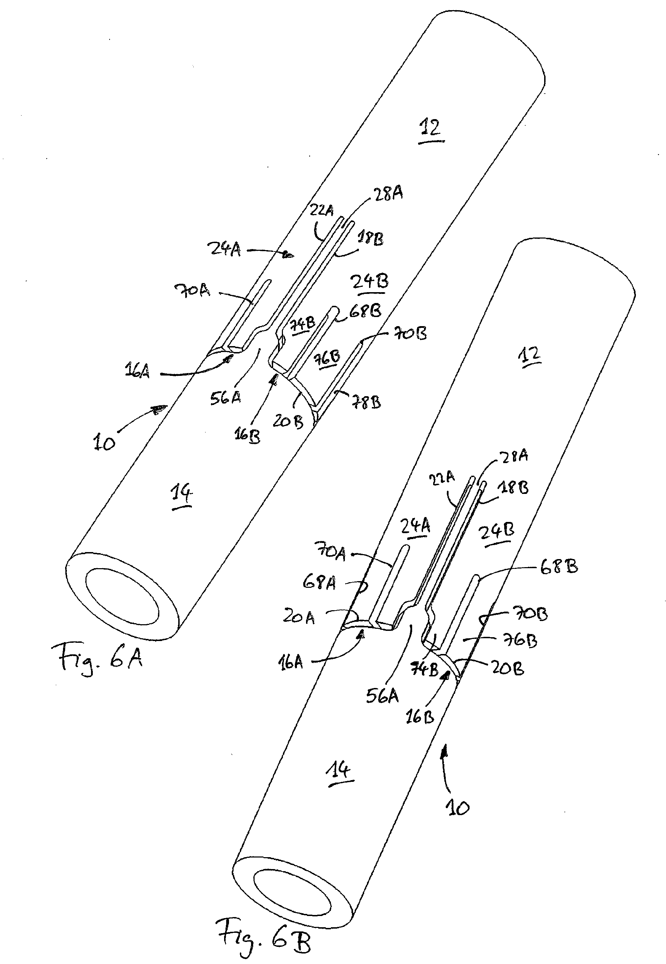

In Fig. 6A und Fig. 6B ist ein weiteres Ausführungsbeispiel gezeigt, bei dem eine Dämpfung für den seitlichen Verdrehungsanschlag vorgesehen ist. Das Ausführungsbeispiel geht von der Ausgestaltung nach Fig. 5 aus, aber es versteht sich, dass auch alle anderen im vorliegenden Dokument beschriebenen Ausführungsformen mit einer Dämpfungsfunktion nach dem im folgenden beschriebenen Prinzip weitergebildet werden können.

In Fig. 6A und Fig. 6B sind die Anschlagbereiche 24x nicht starr, sondern seitlich nachgiebig ausgestaltet. Hierzu sind Ausnehmungen 68x, 70x in die Anschlagbereiche 24x eingearbeitet, also beispielsweise Ausnehmungen 68B, 70B in den Anschlagbereich 24B. Die Ausnehmungen 68x, 70x sind im vorliegenden Beispiel als axial verlaufende Schlitze gezeigt, die von der Aussparung 16x ausgehen und die jeden Anschlagbereich 24x in drei Zungen 74x, 76x, 78x unterteilen. Es sind jedoch auch Ausführungsformen vorgesehen, bei denen die Ausnehmungen 68x, 70x eine andere Form aufweisen. Ferner können die Ausnehmungen 68x, 70x so ausgestaltet sein, dass sie zusätzliche Funktionen - beispielsweise die unten noch beschriebene Funktion eines Ausreißschutzes - übernehmen.

Wenn - bei einer Verdrehung des ersten Lenkwellenabschnitts 12 im Uhrzeigersinn - die Nase 56A mit ihrer rechten Seitenwand an die linke Seitenwand des Anschlagbereichs 24B stößt, so gibt zunächst die relativ schmale Zunge 74B zwischen dem Einschnitt 18B und der Ausnehmung 68B nach, und zwar so lange, bis die Ausnehmung 68B an ihrer unten offenen Seite ganz zusammengedrückt ist. Erst dann, also wenn die seitliche Zunge 74B an die mittlere Zunge 76B des Anschlagbereichs 24B stößt, erfolgt ein im wesentlichen starrer Anschlag. Es ergibt sich somit eine Lenkkraftkennlinie, die zunächst nur durch die Federkonstante der Biegeabschnitte 28x bestimmt wird und relativ flach verläuft, die dann einen steileren Abschnitt aufweist, bei dem die Zunge 74B seitlich gebogen wird, und die schließlich steil ansteigt, sobald die seitliche Zunge 74B an die mittlere Zunge 76B anschlägt. Durch einen solchen stufenweise gedämpften Anschlag werden die Materialbelastung verringert und das Lenkgefühl verbessert.

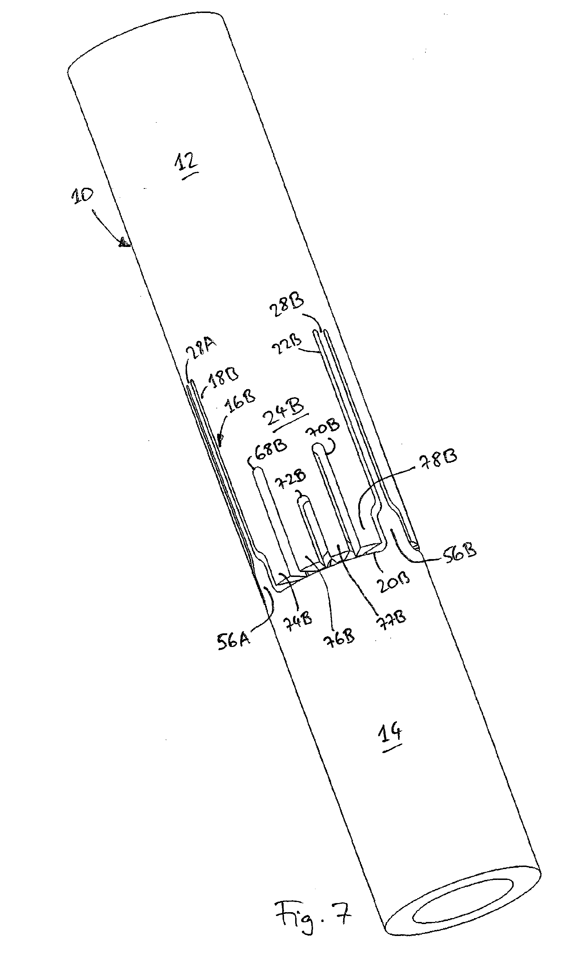

Das gerade beschriebene Grundprinzip eines seitlich nachgiebigen Anschlags kann in weiteren Ausgestaltungen fortgeführt werden, um eine feinere Abstufung der Lenkkraftkennlinie zu erhalten. So zeigt beispielsweise Fig. 7 eine Ausführungsform, bei der der Anschlagbereich 24B durch drei schlitzförmige Ausnehmungen 68B, 72B, 70B in vier Zungen 74B, 76B, 77B, 78B unterteilt sind. Die äußeren Ausnehmungen 68B, 70B sind in axialer Richtung länger als die mittlere Ausnehmung 72B ausgestaltet, so dass die äußeren Zungen 74B, 78B seitlich entsprechend nachgiebiger als die mittleren Zungen 76B, 77B sind. Die anderen beiden Anschlagbereiche 24A, 24C sind entsprechend ausgestaltet.

Bei der Ausgestaltung gemäß Fig. 7 ergibt sich eine feingliedrige Lenkkennlinie, die mit zunehmender Kompression der Ausnehmungen 68B, 70B, 72B und somit zunehmender Anzahl der wirksamen Zungen 74B, 76B, 77B, 78B immer steiler ansteigt. Es versteht sich, dass auch eine derartige Dämpfungskonstruktion auch bei allen anderen im vorliegenden Dokument beschriebenen Ausführungsformen eingesetzt werden kann.

In den bisher beschriebenen Ausführungsbeispielen sind die beiden Lenkwellenabschnitte 12, 14 nur durch die relativ dünnen Biegeabschnitte 28x miteinander verbunden. Je nach der Art der Lagerung der Lenkwelle kann bei manchen Fahrsituationen eine erhebliche Zugkraft auf das Lenkwellenbauteil 10 ausgeübt werden. Im Extremfall besteht die Möglichkeit, dass die relativ dünnen Lenkwellenabschnitte 12, 14 abreißen.

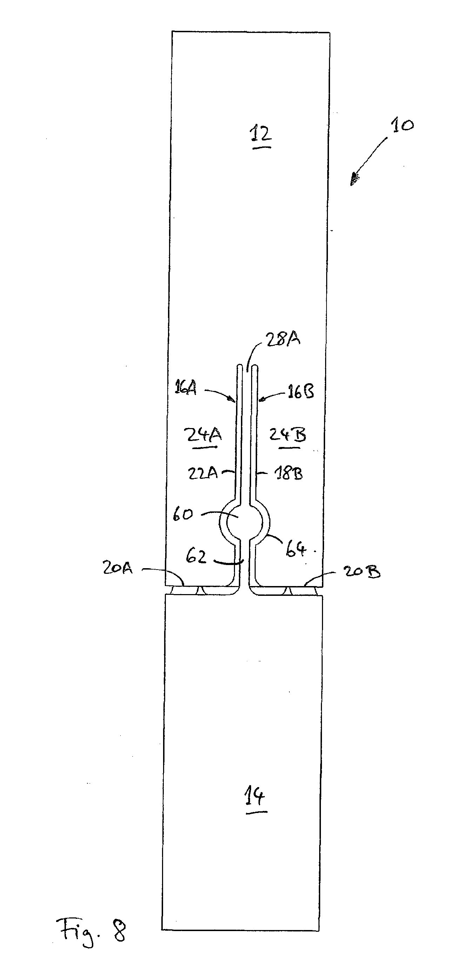

Um diese Möglichkeit auszuschließen, ist bei dem in Fig. 8 gezeigten Ausführungsbeispiel ein Ausreiß-Schutz vorgesehen. Der Ausreiß-Schutz weist eine Verbreiterung 60 auf, die mit dem zweiten Lenkwellenabschnitt 14 über einen Steg 62 verbunden ist. An der Stelle der Verbreiterung 60 bilden die Aussparungen 16A, 16B einen die Verbreiterung 60 umschließenden Bereich 64, während an der Stelle des Steges 62 die Aussparungen 16A, 16B weniger Freiraum lassen, als die Breite der Verbreiterung 60 beträgt. Wenn eine übermäßige Zugkraft auf das Lenkwellenbauteil 10 ausgeübt wird, stößt die in Fig. 8 unten gezeigte Seite der Verbreiterung 60 an das untere Ende des umschließenden Bereichs 64 an, so dass eine weitere Dehnung der Biegeabschnitte 28x und ein Auseinanderreißen der Lenkwellenabschnitte 12, 14 verhindert wird.

In Ausführungsalternativen kann der Steg 62 breiter als der Biegeabschnitt 28A - aber schmäler als die Verbreiterung 60 - ausgestaltet sein, so dass der Steg 62 gleichzeitig als Verdrehungswinkelbegrenzung - ähnlich wie in Fig. 5 gezeigt - dient. Ferner können auch bei dem Ausführungsbeispiel nach Fig. 4 die Nasen 56x mit einer Verbreiterung an ihrem Ende versehen sein. Zusammen mit geeignet geformten Buchten 58x können die Nasen 56x dann sowohl als Ausreiß-Schutz dienen als auch den maximalen Verdrehungswinkel begrenzen. Es versteht sich, dass alle in diesem Dokument beschriebenen Ausführungsformen mit einem Ausreiß-Schutz wie in Fig. 8 gezeigt oder wie im vorliegenden Absatz beschrieben weitergebildet werden können.

Bei allen bislang beschriebenen Ausführungsbeispielen sind die beiden Lenkwellenabschnitte 12, 14 einstückig ausgebildet oder zumindest untrennbar miteinander verbunden. Es sind jedoch auch Ausführungsformen vorgesehen, bei denen die beiden Lenkwellenabschnitte 12, 14 zumindest während der Fertigung zwei getrennte Bauteile sind. Derartige Ausführungsformen weisen zwar mehr Einzelteile auf, aber sie haben den Vorteil, dass manche Bearbeitungsverfahren bei getrennten Lenkwellenabschnitten 12, 14 einfacher durchgeführt werden können. Überdies können dann unterschiedliche Varianten der Lenkwellenabschnitte 12, 14 nach Art eines Baukastensystems in einer Vielzahl möglicher Kombinationen zu Lenkwellenbauteilen 10 zusammengefügt werden.

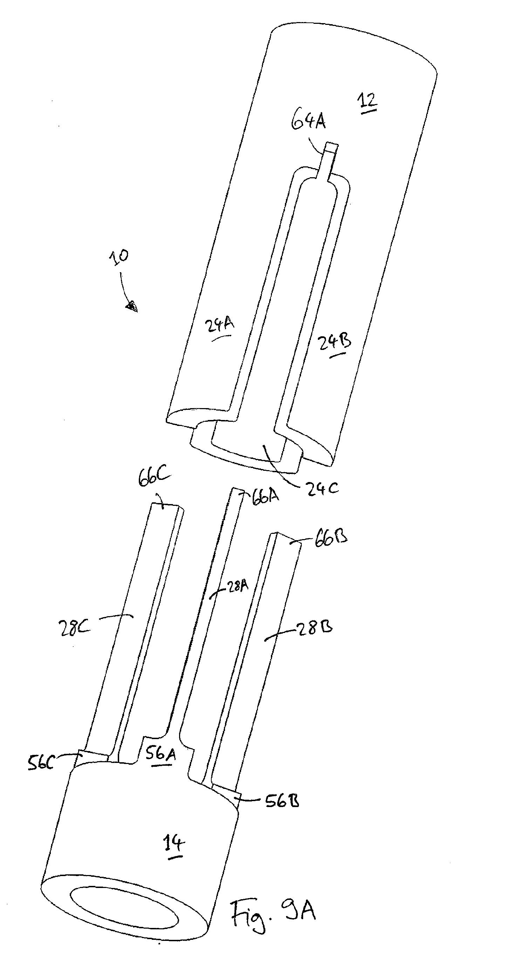

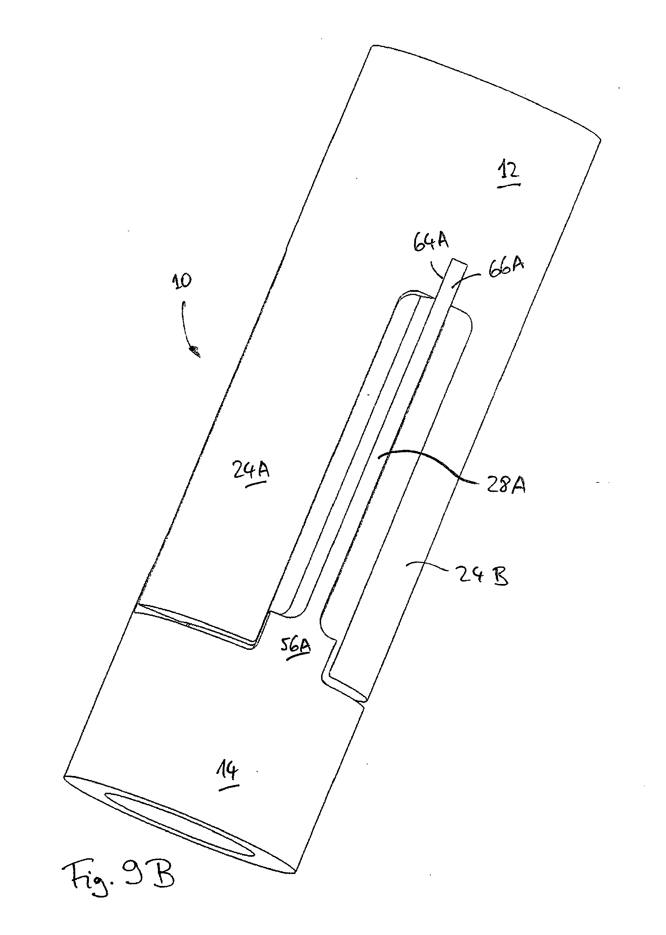

Bei dem in Fig. 9A und Fig. 9B gezeigten Ausführungsbeispiel sind die Biegeabschnitte 28x einstückig mit dem zweiten Lenkwellenabschnitt 14 ausgebildet. Der zweite Lenkwellenabschnitt 14 weist ferner Nasen 56x zur Verdrehungsbegrenzung auf, wie bereits im Zusammenhang mit Fig. 5 beschrieben. Der erste Lenkwellenabschnitt 12 ist mit drei starren Anschlagbereichen 24x ausgestaltet, zwischen denen sich Aussparungen mit Nuten 64x - in Fig. 9A und Fig. 9B ist nur eine Nut 64A gezeigt - befinden.

Bei der Montage werden die beiden Lenkwellenabschnitte 12, 14 ineinander geschoben und dabei jedes Ende 66A, 66B, 66C - zusammenfassend 66x - eines Biegeabschnitts 28x in die zugehörige Nut 64x gepresst. Die Enden 66x können in den Nuten 64x durch Presssitz gehalten werden oder verschweißt oder verlötet oder verklebt werden. In dem fertiggestellten Lenkwellenbauteil 10 können die beiden Lenkwellenabschnitte 12, 14 fest miteinander verbunden oder voneinander trennbar sein. Die Funktion des aus zwei Teilen gefertigten Lenkwellenbauteils 10 gemäß Fig. 9A und Fig. 9B ist identisch zu der Funktion des Ausführungsbeispiels gemäß Fig. 5.

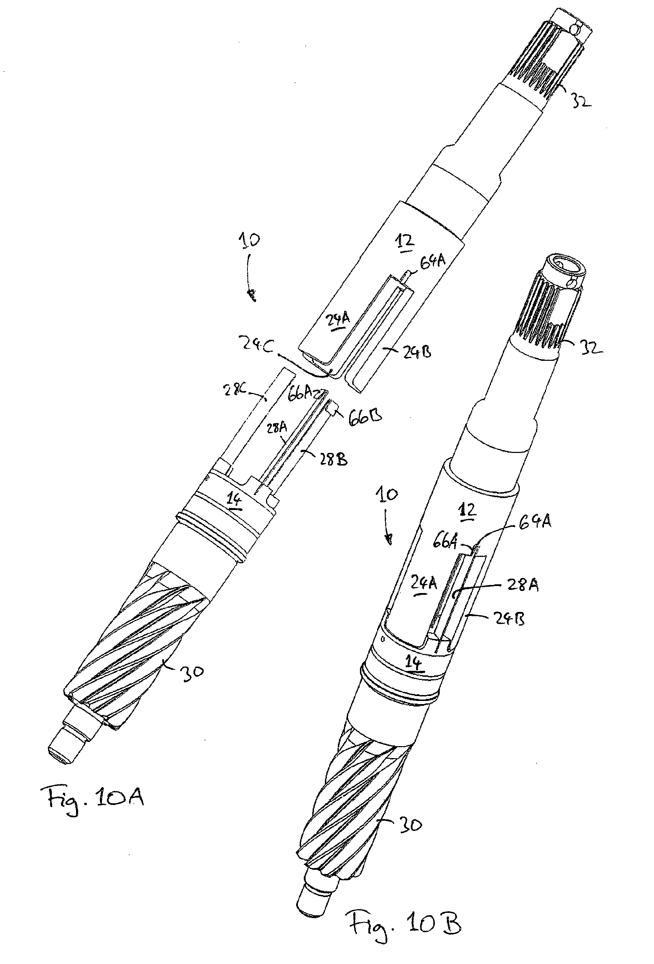

In einer weiteren Ausgestaltung, die in Fig. 10A und Fig. 10B gezeigt ist, sind die Biegeabschnitte 28x als Blattfedern ausgestaltet, die mit keinem der beiden Lenkwellenabschnitte 12, 14 einstückig sind. Auf Seiten des zweiten Lenkwellenabschnitts 14 sind Enden der Biegeabschnitte 28x in Nuten eingepresst, die sich in den Nasen 56x befinden. Die Biegeabschnitte 28x können dort durch Presssitz gehalten oder fest verbunden - insbesondere verschweißt oder verlötet oder verklebt - sein. An ihren dem ersten Lenkwellenabschnitt 12 zugewandten Endbereichen 66x sind die Biegeabschnitte 18x umgebogen und in die Nuten 64x eingesetzt. Im vorliegenden Ausführungsbeispiel werden Biegeabschnitte 18x lediglich durch die Federspannung ihrer Endbereiche 66x in den Nuten 64x gehalten, während in Ausführungsalternativen eine feste und/oder untrennbare Verbindung vorgesehen ist. Insbesondere kann jeder Endbereich 66x in der Art eines Widerhakens einen geeignet geformten Rücksprung der zugehörigen Nut 64x hintergreifen.

Die hier beschriebenen Lenkwellenbauteile 10 können in unterschiedlichen Verfahren hergestellt werden. Bei Ausgestaltungen mit einstückig ausgebildeten Lenkwellenabschnitten 12, 14 können die gewünschten Aussparungen 16x durch ein geeignetes Schneideverfahren in ein rohrförmiges Werkstück eingebracht werden. Auch Ausgestaltungen mit zwei anfangs getrennten Lenkwellenabschnitten 12, 14 können auf diese Weise aus zwei Werkstücken gefertigt werden. Als Schneideverfahren bieten sich insbesondere Wasserschneiden, Plasmaschneiden, Laserschneiden oder Elektronenstrahlscheiden (EB-Schneiden; EB = *elecfron beam*) an. Diese Verfahren ergeben Werkstücke hoher Qualität, erfordern aber relativ lange Taktzeiten.

Ferner sind Herstellungsverfahren vorgesehen, bei denen die Aussparungen 16x durch ein schnelles und kostengünstiges Verfahren - beispielsweise Stanzen - in einem flachen Metallwerkstück - beispielsweise einem Metallblech oder einer Metallplatte oder einem Metallband - ausgebildet werden. Das gestanzte Werkstück wird dann zu einem Rohr gerundet und mit einer Längsnaht verschweißt. In diesem Zusammenhang können auch weitere Bauteile - beispielsweise ein Ritzel - an das Rohr angeschweißt werden. Dieses Verfahren eignet sich sowohl zur Fertigung von einstückig ausgebildeten Lenkwellenabschnitten 12, 14, als auch zur Fertigung einzelner Lenkwellenabschnitte 12, 14, wie sie beispielsweise bei den Ausgestaltungen nach Fig. 9A und Fig. 9B verwendet werden.

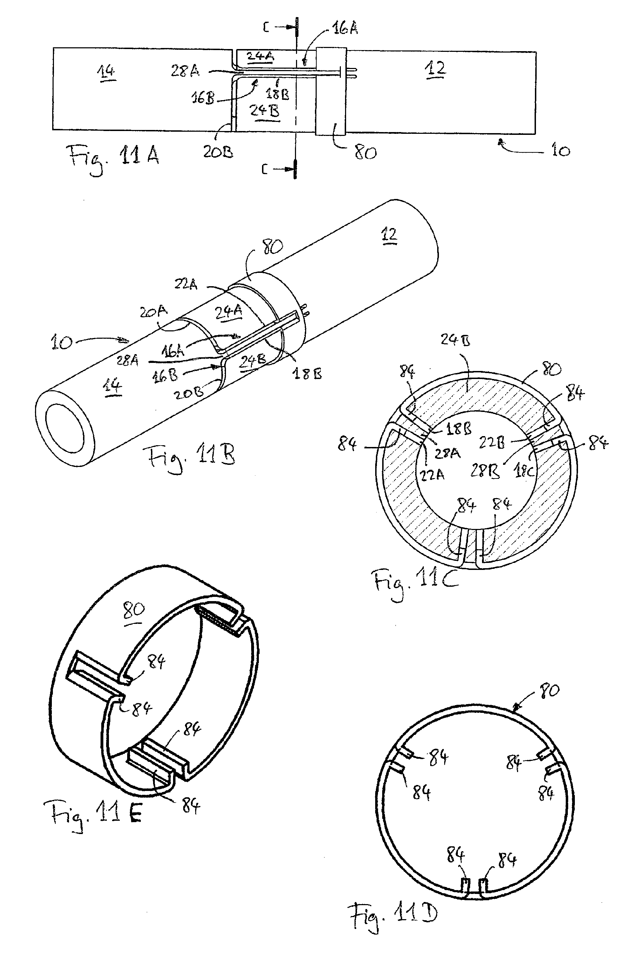

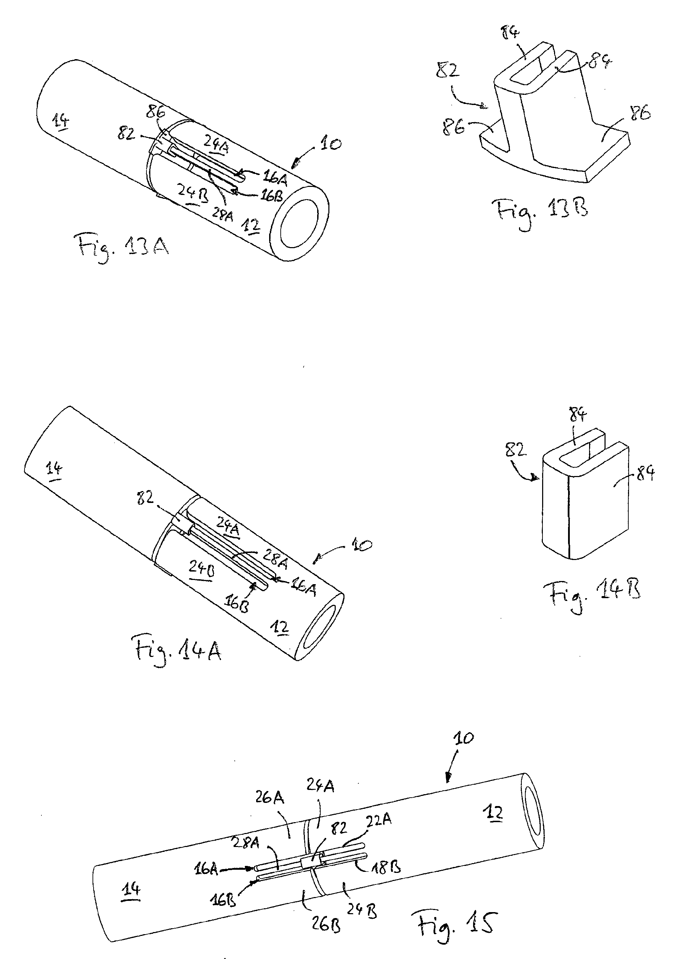

Fig. 11A - Fig. 15 zeigen Ausgestaltungen, bei denen das Lenkwellenbauteil 10 zusätzliche Bauteile aufweist, die als Ring 80 (Fig. 11A - Fig. 12C) oder als aufsteckbarer Clip 82 (Fig. 13A - Fig. 15) ausgestaltet sind. Ein gemeinsames Merkmal dieser Bauteile ist es, dass sie in montiertem Zustand radial nach innen weisende Stege 84 aufweisen, die in die Aussparungen 16x zwischen den Biegeabschnitten 28x und angrenzenden Anschlagbereichen 24x, 26x eingreifen. Die Stege 84 weisen entweder die gleiche Breite wie die Aussparungen 16x an der Stelle des Eingriffs der Stege 84 oder einen Teil dieser Breite auf. Im erstgenannten Fall fixieren die Stege 84 den entsprechenden Biegeabschnitt 28x in den Aussparungen 16x, während im zweitgenannten Fall die Stege 84 einen Anschlag für die maximale seitliche Auslenkung des Biegeabschnitts 28x darstellen. Es versteht sich, dass Bauteile mit Stegen 84 nicht nur in den hier beispielhaft gezeigten Formen als Ringe 80 oder Clips 82, sondern auch in anderen Bauformen ausgestaltet sein können. Derartige Bauteile können bei allen im vorliegenden Dokument beschriebenen Ausführungsbeispielen eingesetzt werden.

Bei dem in Fig. 11A - Fig. 11E gezeigten Ring 80 füllen die Stege 84 die lichte Breite der Aussparungen 16x - genauer gesagt, der axialen Einschnitte 18x, 22x der Aussparungen 16x - vollständig aus. Mit anderen Worten fixiert der Ring 80 den in Höhe des Rings 80 befindlichen Teil der Biegeabschnitte 28x zwischen den Anschlagbereichen 24x. Die Federwirkung des Lenkwellenbauteils 10 wird dann nur von demjenigen Teil der Biegeabschnitte 28x hervorgerufen, der sich zwischen dem Ring 80 und dem zweiten Lenkwellenabschnitt 14 befindet. Die axiale Position der Rings 80 beeinflusst daher die effektive Federkennlinie und somit die Lenkcharakteristik.

In manchen Ausgestaltungen kann der Ring 80 bei der Montage der Lenkung justiert und dann fest fixiert werden. Die axiale Position des Rings 80 kann aber auch durch eine Werkstatt einstellbar sein. In weiteren Ausführungsformen ist der Ring 80 motorisch verfahrbar ausgestaltet, so dass der Fahrer während der Betriebs eines Fahrzeugs unterschiedliche Lenkcharakteristiken (Sport, Komfort, etc.) einstellen kann.

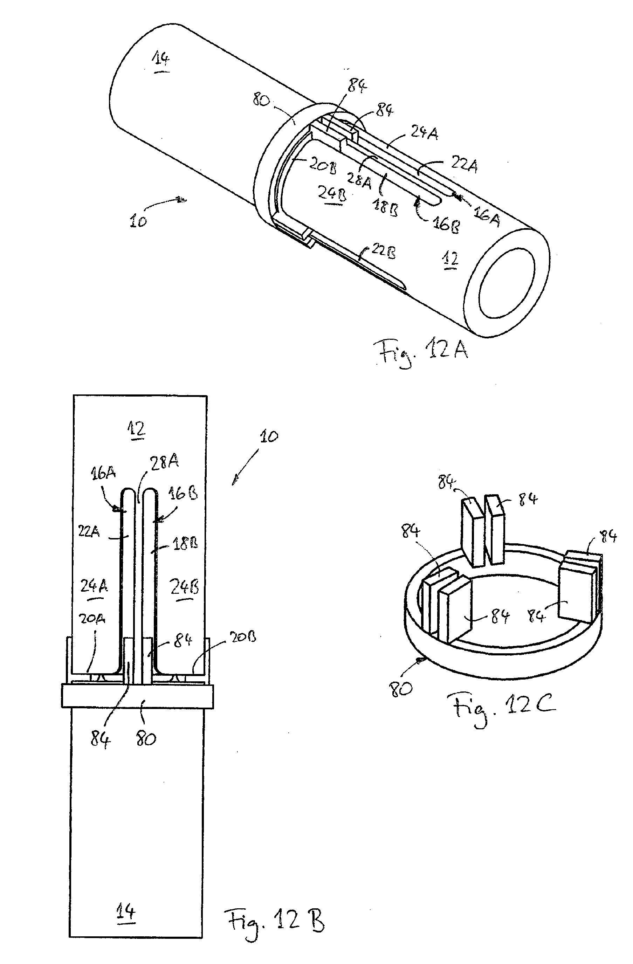

Bei den Ausgestaltungen nach Fig. 12A - Fig. 15 dienen der Ring 80 bzw. die Clips 82 der leichteren Herstellbarkeit von Lenkungen, die auf kleine Verdrehwinkel zwischen den beiden Lenkwellenabschnitten 12, 14 beschränkt sind. Dies können beispielsweise Lenkungen von sportlichen Fahrzeugen sein, bei denen hohe Anforderungen an eine besonders direkte und präzise Lenkung gestellt werden.

Um den maximalen Verdrehwinkel 12, 14 mechanisch auf ein geringes Maß zu beschränken, muss der effektive Abstand zwischen den Biegeabschnitten 28x und den Seitenflächen der Anschlagbereiche 24x, 26x entsprechend gering sein. Dies kann bei Verwendung üblicher Werkzeuge einen relativ hohen Fertigungsaufwand verursachen. Die Stege 84 des Rings 80 bzw. der Clips 82 nach Fig. 12A - Fig. 15 dienen hier als Distanzstücke, die den Freiraum in den Aussparungen 16x - genauer gesagt, der axialen Einschnitte 18x, 22x der Aussparungen 16x - teilweise ausfüllen. Somit verringert sich die effektive Breite der Aussparungen 16x - genauer gesagt, der axialen Einschnitte 18x, 22x der Aussparungen 16x - und damit der maximale Verdrehwinkel zwischen den beiden Lenkwellenabschnitten 12, 14. Auch hier können bei der Montage einer Lenkung unterschiedliche Lenkcharakteristiken erzielt werden, indem Ringe 80 bzw. Clips 82 mit unterschiedlich breiten Stegen 84 verwendet werden.

In Fig. 12A - Fig. 12C ist eine Ausführungsform des Rings 80 mit den gerade beschriebenen, als Distanzstücke für die Verdrehwinkelbegrenzung dienenden Stegen 84 gezeigt. Fig. 13A und Fig. 13B zeigen eine Ausgestaltung von Clips 82, die rechtwinklig zu den Stegen 84 einen Flansch 86 aufweisen. Der Flansch 86 jedes Clips 82 befindet sich in den in Umfangsrichtung verlaufenden Einschnitten 20x der Aussparungen 16x und fixiert den Clip 82 in seiner axialen Position. Bei der Ausführungsform gemäß Fig. 14A und Fig. 14B ist der Clip 82 auf ein Minimum reduziert. Der Clip 82 kann z.B. durch Presssitz sicher auf dem jeweiligen Biegeabschnitt 28x gehalten sein. In der Ausgestaltung von Fig. 15 ist der Clip 82 ungefähr in der Mitte des Biegeabschnitts 28A angeordnet und dient als Anschlag für die vier Anschlagbereiche 24A, 24B, 26A und 26B.

Die in der obigen Beschreibung genannten und in den Zeichnungen dargestellten Einzelheiten sollen nicht als Einschränkung des Erfindungsbereichs, sondern als Beispiele einiger Ausführungsformen der Erfindung angesehen werden. Weitere Abwandlungen sind für den Fachmann unmittelbar ersichtlich. So können insbesondere Merkmale der oben beschriebenen Ausführungsformen miteinander kombiniert werden, um weitere Ausgestaltungen der Erfindung zu erhalten. Der Erfindungsbereich soll demgemäß nicht durch die beschriebenen Ausführungsbeispiele, sondern durch die Ansprüche und ihre Äquivalente definiert werden.

## Patentansprüche

1. Lenkwellenbauteil (10) mit:
einem ersten und einem zweiten Lenkwellenabschnitt (12, 14), die eine gemeinsame Längsachse (A) aufweisen,
mindestens zwei voneinander getrennten Biegeabschnitten (28A, 28B, 28C, 28D), wobei sich jeder der Biegeabschnitte (28A, 28B, 28C, 28D) im wesentlichen in axialer Richtung zwischen dem ersten und dem zweiten Lerikwellenabschnitt (12, 14) erstreckt und entfernt von der gemeinsamen Längsachse (A) angeordnet ist, und
mindestens zwei Aussparungen (16A, 16B, 16C), wobei jeder Biegeabschnitt (28A, 28B, 28C, 28D) seitlich an je mindestens eine dieser Aussparungen (16A, 16B, 16C) angrenzt,
**dadurch gekennzeichnet, dass**
mindestens eine der Aussparungen (16A, 16B, 16C) mindestens einen Anschlagbereich (24A, 24B, 24C, 24D, 26A, 26B, 26C) eines der Lenkwellenabschnitte (12, 14) definiert, der dazu eingerichtet ist, als mechanischer Anschlag den maximalen Verdrehungswinkel der beiden Lenkwellenabschnitte (12, 14) zueinander zu begrenzen.

2. Lenkwellenbauteil (10) nach Anspruch 1, **dadurch gekennzeichnet, dass** der Anschlagbereich (24A, 24B, 24C, 24D, 26A, 26B, 26C) dazu eingerichtet ist, in Kontakt mit mindestens einem Biegeabschnitt (28A, 28B, 28C, 28D) und/oder dem anderen Lenkwellenabschnitt (12, 14) zu kommen, um den maximalen Verdrehungswinkel der beiden Lenkwellenabschnitte (12, 14) zueinander zu begrenzen.

3. Lenkwellenbauteil (10) nach Anspruch 1 oder Anspruch 2, **dadurch gekennzeichnet, dass** der mindestens eine Anschlagbereich (24A, 24B, 24C, 24D, 26A, 26B, 26C) in Umfangsrichtung neben mindestens einem der Biegeabschnitte (28A, 28B, 28C, 28D) und/oder neben mindestens einer Nase (56A, 56B), die in axialer Richtung an einen der Biegeabschnitte (28A, 28B, 28C, 28D) anschließt, angeordnet ist.

4. Lenkwellenbauteil (10) nach einem der Ansprüche 1 bis 3, **dadurch gekennzeichnet, dass** jeder der Biegeabschnitte (28A, 28B, 28C, 28D) bei einer Verdrehung des ersten Lenkwellenabschnitts (12) relativ zum zweiten Lenkwellenabschnitt (14) mehr auf Biegung als auf Torsion beansprucht wird.

5. Lenkwellenbauteil (10) nach einem der Ansprüche 1 bis 4, **dadurch gekennzeichnet, dass** der erste und der zweite Lenkwellenabschnitt (12, 14) rohrförmig ausgestaltet sind.

6. Lenkwellenbauteil (10) nach einem der Ansprüche 1 bis 5, **dadurch gekennzeichnet, dass** jeder Biegeabschnitt (28A, 28B, 28C, 28D) einstückig mit je mindestens einem der Lenkwellenabschnitte (12, 14) ausgebildet ist.

7. Lenkwellenbauteil (10) nach einem der Ansprüche 1 bis 6, **dadurch gekennzeichnet, dass** mindestens ein Biegeabschnitt (28A, 28B, 28C, 28D) einstückig mit den beiden Lenkwellenabschnitten (12, 14) ausgebildet ist.

8. Lenkwellenbauteil (10) nach einem der Ansprüche 1 bis 7, **dadurch gekennzeichnet, dass** mindestens drei Aussparungen (16A, 16B, 16C) vorgesehen sind, die mindestens drei Biegeabschnitte (28A, 28B, 28C, 28D) definieren.

9. Lenkwellenbauteil (10) nach einem der Ansprüche 1 bis 8, **dadurch gekennzeichnet, dass**
mindestens eine der Aussparungen (16A, 16B, 16C) U-förmig oder H-förmig ist, wobei jeder Biegeabschnitt (28A, 28B, 28C, 28D) seitlich durch je mindestens eine der Aussparungen (16A, 16B, 16C) begrenzt ist, und/oder
die beiden Lenkwellenabschnitte (12, 14) durch die Aussparungen (16A, 16B, 16C) an einem überwiegenden Teil ihres Umfangs voneinander getrennt sind, wobei jeder Biegeabschnitt (28A, 28B, 28C, 28D) seitlich durch je mindestens eine der Aussparungen (16A, 16B, 16C) begrenzt ist.

10. Lenkwellenbauteil (10) nach Anspruch 2 oder einem der Ansprüche 3 bis 9, soweit dieser auf Anspruch 2 rückbezogen ist, **dadurch gekennzeichnet, dass**, der mindestens eine Anschlagbereich (24A, 24B, 24C, 24D, 26A, 26B, 26C) mindestens eine Ausnehmung (68A, 68B, 70A, 70B, 72B) zur seitlichen Anschlagsdämpfung aufweist.

11. Lenkwellenbauteil (10) nach einem der Ansprüche 1 bis 10, **dadurch gekennzeichnet, dass** ein Ausreiß-Schutz vorgesehen ist, der ein Auseinanderziehen der Lenkwellenabschnitte (12, 14) in axialer Richtung verhindert, wobei der Ausreiß-Schutz vorzugsweise durch den Eingriff mindestens einer Verbreiterung (60) eines der Lenkwellenabschnitte (12, 14) oder eines Biegeabschnitts (16A, 16B, 16C) in eine Aussparung des anderen Lenkwellenabschnitts (12, 14) bereitgestellt wird.

12. Lenkwellenbauteil (10) nach einem der Ansprüche 1 bis 11, ferner mit einer auf eine Verdrehung des ersten Lenkwellenabschnitts (12) zum zweiten Lenkwellenabschnitt (14) ansprechenden Beeinflussungseinrichtung (38), insbesondere einem Sensor (44) oder einem Ventil (50, 52, 54).

13. Lenkwellenbauteil (10) nach einem der Ansprüche 1 bis 12, ferner mit mindestens einem weiteren Bauteil, das mindestens einen Steg (84) aufweist, der in eine der Aussparungen (16A, 16B, 16C) zwischen den Biegeabschnitten (28A, 28B, 28C, 28D) und angrenzenden Anschlagbereichen (24A, 24B, 24C, 24D, 26A, 26B, 26C) eingreift.

14. Lenkwellenbauteil (10) nach Anspruch 13, **dadurch gekennzeichnet, dass**
das mindestens eine weitere Bauteil ein Ring (80) ist, der das Lenkwellenbauteil (10) in Umfangsrichtung umschließt, und/oder
das mindestens eine weitere Bauteil in axialer Richtung auf dem Lenkwellenbauteil (10) verschiebbar ist, um unterschiedliche Lenkcharakteristiken zu erzielen.

15. Lenkwelle mit einem Lenkwellenbauteil (10) nach einem der Ansprüche 1 bis 14.

## Claims

1. Steering shaft component (10), comprising:
a first and a second steering shaft section (12, 14) having a common longitudinal axis (A),
at least two bending sections (28A, 28B, 28C, 28D) separate from one another, wherein each of the bending sections (28A, 28B, 28C, 28D) substantially extends in the axial direction between the first and the second steering shaft sections (12, 14) and is disposed spaced from the common longitudinal axis (A), and
at least two cut-outs (16A, 16B, 16C), wherein each bending section (28A, 28B, 28C, 28D) is laterally adjacent to at least one of these cut-outs (16A, 16B, 16C), respectively,
**characterised in that**
at least one of the cut-outs (16A, 16B, 16C) defines at least one stop area (24A, 24B, 24C, 24D, 26A, 26B, 26C) of one of the steering shaft sections (12, 14) which is configured to limit as a mechanical stop the maximum angle of rotation of the two steering shaft sections (12, 14) relative to each other.

2. Steering shaft component (10) according to claim 1, **characterised in that** the stop area (24A, 24B, 24C, 24D, 26A, 26B, 26C) is configured to come into contact with at least one bending section (28A, 28B, 28C, 28D) and/or the other steering shaft section (12, 14) in order to limit the maximum angle of rotation of the two steering shaft sections (12, 14) relative to each other.

3. Steering shaft component (10) according to claim 1 or claim 2, **characterised in that** the at least one stop area (24A, 24B, 24C, 24D, 26A, 26B, 26C) is disposed, in the circumferential direction, next to at least one of the bending sections (28A, 28B, 28C, 28D) and/or next to at least one tab (56A, 56B) which is adjacent to one of the bending sections (28A, 28B, 28C, 28D) in the axial direction.

4. Steering shaft component (10) according to any one of the claims 1 to 3, **characterised in that** each of the bending sections (28A, 28B, 28C, 28D) is subjected more to bending than to torsion during a rotation of the first steering shaft section (12) relative to the second steering shaft section (14).

5. Steering shaft component (10) according to any one of the claims 1 to 4, **characterised in that** the first and the second steering shaft sections (12, 14) are configured in a tubular shape.

6. Steering shaft component (10) according to any one of the claims 1 to 5, **characterised in that** each bending section (28A, 28B, 28C, 28D) is formed integrally with at least one of the steering shaft sections (12, 14), respectively.

7. Steering shaft component (10) according to any one of the claims 1 to 6, **characterised in that** at least one bending section (28A, 28B, 28C, 28D) is formed integrally with the two steering shaft sections (12, 14).

8. Steering shaft component (10) according to any one of the claims 1 to 7, **characterised in that** at least three cut-outs (16A, 16B, 16C) are provided that define at least three bending sections (28A, 28B, 28C, 28D).

9. Steering shaft component (10) according to any one of the claims 1 to 8, **characterised in that**
at least one of the cut-outs (16A, 16B, 16C) is U-shaped or H-shaped, wherein each bending section (28A, 28B, 28C, 28D) is laterally limited by at least one of the cut-outs (16A, 16B, 16C), respectively, and/or
the two steering shaft sections (12, 14) are separated from each other by the cut-outs (16A, 16B, 16C) over a predominant part of their circumference, wherein each bending section (28A, 28B, 28C, 28D) is laterally limited by at least one of the cut-outs (16A, 16B, 16C), respectively.

10. Steering shaft component (10) according to claim 2 or one of the claims 3 to 9, provided it refers claim 2, **characterised in that** the at least one stop area (24A, 24B, 24C, 24D, 26A, 26B, 26C) comprises at least one cut-out (68A, 68B, 70A, 70B, 72B) for lateral stop cushioning.

11. Steering shaft component (10) according to any one of the claims 1 to 10, **characterised in that** a pull-out protection means is provided which prevents the steering shaft sections (12, 14) from being pulled apart in the axial direction, wherein the pull-out protection means is preferably provided by at least one widened portion (60) of one of the steering shaft sections (12, 14) or of a bending section (16A, 16B, 16C) reaching into a cut-out of the other steering shaft section (12, 14).

12. Steering shaft component (10) according to any one of the claims 1 to 11, further comprising an influencing device (38), particularly a sensor (44) or a valve (50, 52, 54), that reacts to a rotation of the first steering shaft section (12) relative to the second steering shaft section (14).

13. Steering shaft component (10) according to any one of the claims 1 to 12, further comprising at least one further component which comprises at least one web (84) that reaches into one of the cut-outs (16A, 16B, 16C) between the bending sections (28A, 28B, 28C, 28D) and adjacent stop areas (24A, 24B, 24C, 24D, 26A, 26B, 26C).

14. Steering shaft component (10) according to claim 13, **characterised in that**
the at least one further component is a ring (80) that encloses the steering shaft component (10) in the circumferential direction, and/or
the at least one further component is displaceable in the axial direction on the steering shaft component (10) in order to obtain different steering characteristics.

15. Steering shaft, comprising a steering shaft component (10) according to any one of the claims 1 to 14.

## Revendications

1. Un composant d'arbre de direction (10), comprenant :
une première et une deuxième sections d'arbre de direction (12, 14) possédant un axe longitudinal commun (A),
au moins deux sections de courbure (28A, 28B, 28C, 28D) séparées les unes des autres, où chacune des sections de courbure (28A, 28B, 28C, 28D) s'étend sensiblement dans la direction axiale entre la première et la deuxième sections d'arbre de direction (12, 14) et est disposée espacée de l'axe longitudinal commun (A), et
au moins deux entailles (16A, 16B, 16C), où chaque section de courbure (28A, 28B, 28C, 28D) est latéralement adjacente à au moins une de ces entailles (16A, 16B, 16C), respectivement,
**caractérisé en ce que**
au moins une des entailles (16A, 16B, 16C) définit au moins une zone de butée (24A, 24B, 24C, 24D, 26A, 26B, 26C) de l'une des sections d'arbre de direction (12, 14) qui est configurée de façon à limiter sous la forme d'une butée mécanique l'angle de rotation maximum des deux sections d'arbre de direction (12, 14) l'une par rapport à l'autre.

2. Le composant d'arbre de direction (10) selon la Revendication 1, **caractérisé en ce que** la zone de butée (24A, 24B, 24C, 24D, 26A, 26B, 26C) est configurée de façon à venir en contact avec au moins une section de courbure (28A, 28B, 28C, 28D) et/ou l'autre section d'arbre de direction (12, 14) afin de limiter l'angle de rotation maximum des deux sections d'arbre de direction (12, 14) l'une par rapport à l'autre.

3. Le composant d'arbre de direction (10) selon la Revendication 1 ou 2, **caractérisé en ce que** la au moins une zone de butée (24A, 24B, 24C, 24D, 26A, 26B, 26C) est disposée, dans la direction circonférentielle, à côté d'au moins une des sections de courbure (28A, 28B, 28C, 28D) et/ou à côté d'au moins une languette (56A, 56B) qui est adjacente à une des sections de courbure (28A, 28B, 28C, 28D) dans la direction axiale.

4. Le composant d'arbre de direction (10) selon l'une quelconque des Revendications 1 à 3, **caractérisé en ce que** chacune des sections de courbure (28A, 28B, 28C, 28D) est sujette plus à une courbure qu'à une torsion au cours d'une rotation de la première section d'arbre de direction (12) par rapport à la deuxième section d'arbre de direction (14).

5. Le composant d'arbre de direction (10) selon l'une quelconque des Revendications 1 à 4, **caractérisé en ce que** la première et la deuxième sections d'arbre de direction (12, 14) sont configurées dans une forme tubulaire.

6. Le composant d'arbre de direction (10) selon l'une quelconque des Revendications 1 à 5, **caractérisé en ce que** chaque section de courbure (28A, 28B, 28C, 28D) est formée d'un seul tenant avec au moins une des sections d'arbre de direction (12, 14), respectivement.

7. Le composant d'arbre de direction (10) selon l'une quelconque des Revendications 1 à 6, **caractérisé en ce qu'**au moins une section de courbure (28A, 28B, 28C, 28D) est formée d'un seul tenant avec les deux sections d'arbre de direction (12, 14).

8. Le composant d'arbre de direction (10) selon l'une quelconque des Revendications 1 à 7, **caractérisé en ce qu'**au moins trois entailles (16A, 16B, 16C) sont fournies qui définissent au moins trois sections de courbure (28A, 28B, 28C, 28D).

9. Le composant d'arbre de direction (10) selon l'une quelconque des Revendications 1 à 8, **caractérisé en ce que**
au moins une des entailles (16A, 16B, 16C) est en forme de U ou en forme de H, où chaque section de courbure (28A, 28B, 28C, 28D) est limitée latéralement par au moins une des entailles (16A, 16B, 16C), respectivement, et/ou
les deux sections d'arbre de direction (12, 14) sont séparées l'une de l'autre par les entailles (16A, 16B, 16C) sur une partie prédominante de leur circonférence, où chaque section de courbure (28A, 28B, 28C, 28D) est limitée latéralement par au moins une des entailles (16A, 16B, 16C), respectivement.

10. Le composant d'arbre de direction (10) selon la Revendication 2 ou l'une des Revendications 3 à 9, à condition qu'elle fasse référence à la Revendication 2, **caractérisé en ce que** la au moins une zone de butée (24A, 24B, 24C, 24D, 26A, 26B, 26C) comprend au moins une entaille (68A, 68B, 70A, 70B, 72B) pour un amortissement de butée latéral.

11. Le composant d'arbre de direction (10) selon l'une quelconque des Revendications 1 à 10, **caractérisé en ce qu'**un moyen de protection escamotable est fourni qui empêche les sections d'arbre de direction (12, 14) d'être écartées l'une de l'autre dans la direction axiale, où le moyen de protection escamotable est de préférence fourni par au moins une partie élargie (60) de l'une des sections d'arbre de direction (12, 14) ou d'une section de courbure (16A, 16B, 16C) pénétrant dans une entaille de l'autre section d'arbre de direction (12, 14).

12. Le composant d'arbre de direction (10) selon l'une quelconque des Revendications 1 à 11, comprenant en outre un dispositif de régulation (38), plus particulièrement un capteur (44) ou une soupape (50, 52, 54), qui réagit à une rotation de la première section d'arbre de direction (12) par rapport à la deuxième section d'arbre de direction (14).

13. Le composant d'arbre de direction (10) selon l'une quelconque des Revendications 1 à 12, comprenant en outre au moins un autre composant qui comprend au moins une armature (84) qui pénètre dans une des entailles (16A, 16B, 16C) entre les sections de courbure (28A, 28B, 28C, 28D) et des zones de butée adjacentes (24A, 24B, 24C, 24D, 26A, 26B, 26C).

14. Le composant d'arbre de direction (10) selon la Revendication 13, **caractérisé en ce que**
le au moins un autre composant est une bague (80) qui entoure le composant d'arbre de direction (10) dans la direction circonférentielle, et/ou
le au moins un autre composant est déplaçable dans la direction axiale sur le composant d'arbre de direction (10) afin d'obtenir différentes caractéristiques de direction.

15. Un arbre de direction, comprenant un composant d'arbre de direction (10) selon l'une quelconque des Revendications 1 à 14.
